## Europäisches Patentamt
## European Patent Office
## Office européen des brevets

(19)

(11) Numéro de publication: **0 255 786**
**B1**

(12) **FASCICULE DE BREVET EUROPEEN**

(45) Date de publication du fascicule du brevet:
27.06.90

(21) Numéro de dépôt: 87401616.5

(22) Date de dépôt: 09.07.87

(51) Int. Cl.⁵: **B01D 9/00**, C13F 1/02

(54) Procédé et installation pour la production d'un magma d'ensemencement pour un appareil de cristallisation à marche continue.

(30) Priorité: 01.08.86 FR 8611190
23.01.87 FR 8700761

(43) Date de publication de la demande:
10.02.88 Bulletin 88/6

(45) Mention de la délivrance du brevet:
27.06.90 Bulletin 90/26

(73) Titulaire: **FIVES-CAIL BABCOCK, Société Anonyme,
38, rue de la République, F-93107 Montreuil(FR)**

(72) Inventeur: **Journet, Gérard, 9, rue de l'Houssoye,
F-59310 Coutiches(FR)**

(84) Etats contractants désignés:
AT BE CH DE ES GB GR IT LI LU NL SE

(74) Mandataire: **Fontanié, Etienne, FIVES-CAIL
BABCOCK 38, rue de la République, F-93107 Montreuil
Cédex(FR)**

(56) Documents cités:
FR-A- 2 374 067
FR-A- 2 457 116
US-A- 3 642 534
US-A- 4 155 774

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à la production d'un magma d'ensemencement pour un appareil de cristallisation à marche continue à partir d'une fraction de la masse-cuite produite par cet appareil en diluant cette fraction de la masse-cuite produite par cet appareil pour réduire sa viscosité et en l'introduisant dans un broyeur où les cristaux qu'elle contient sont broyés au sein de la liqueur-mère. Un tel procédé est décrit dans le brevet français FR-A 1 597 729.

Il est difficile, avec le procédé connu, de produire un magma d'ensemencement de qualité déterminée, ayant notamment une teneur en cristaux et une granulométrie des cristaux données, parce qu'on ne contrôle pas l'état de la liqueur-mère dans le broyeur, ce qui conduit à une production excessive de très petits cristaux (fines) si la liqueur-mère est sursaturée ou à une refonte trop importante des cristaux si son degré de sous-saturation est trop faible. La masse-cuite produite à partir de ce magma aura nécessairement une qualité irrégulière.

Le but de la présente invention est de permettre la production d'un magma de qualité donnée en contrôlant l'état de la masse-cuite en amont du broyeur et du magma sortant du broyeur.

La présente invention a pour objet un procédé de production d'un magma d'ensemencement pour appareil de cristallisation à marche continue tel que défini ci-dessus, caractérisé en ce que le coefficient de saturation de la liqueur-mère de ladite fraction de masse-cuite diluée entrant dans le broyeur est maintenu dans la fourchette 0,95–1,00, de façon à n'assurer la refonte que des très fins cristaux produits par broyage en réglant la température et le débit de la liqueur de dilution.

La température de la liqueur de dilution sera avantageusement réglée en fonction de la teneur en matières sèches de ladite liqueur.

Le débit de la liqueur de dilution pourra être réglé en fonction de la viscosité ou de la température de la masse-cuite diluée ou de la température du magma à sa sortie du broyeur. En variante, ce débit pourra être maintenu proportionnel au débit de magma produit.

L'invention a également pour objet une installation pour la mise en œuvre de ce procédé comportant un appareil où la masse-cuite est diluée au moyen d'une liqueur et un broyeur où la masse-cuite diluée est broyée et caractérisée en ce qu'elle comporte en outre un échangeur de chaleur placé en amont de l'appareil de dilution sur le circuit de ladite liqueur et un système de régulation qui commande une vanne de réglage placée sur ledit circuit de la liqueur de dilution soit en fonction des informations d'un appareil de mesure de viscosité ou de la température de la masse-cuite diluée alimentant le broyeur, soit en fonction des informations d'un appareil de mesure de la température ou du débit du magma à la sortie du broyeur.

A la sortie du broyeur, le magma obtenu pourra être soumis à une opération de tamisage pour éliminer les gros cristaux qui seront recyclés en amont du broyeur.

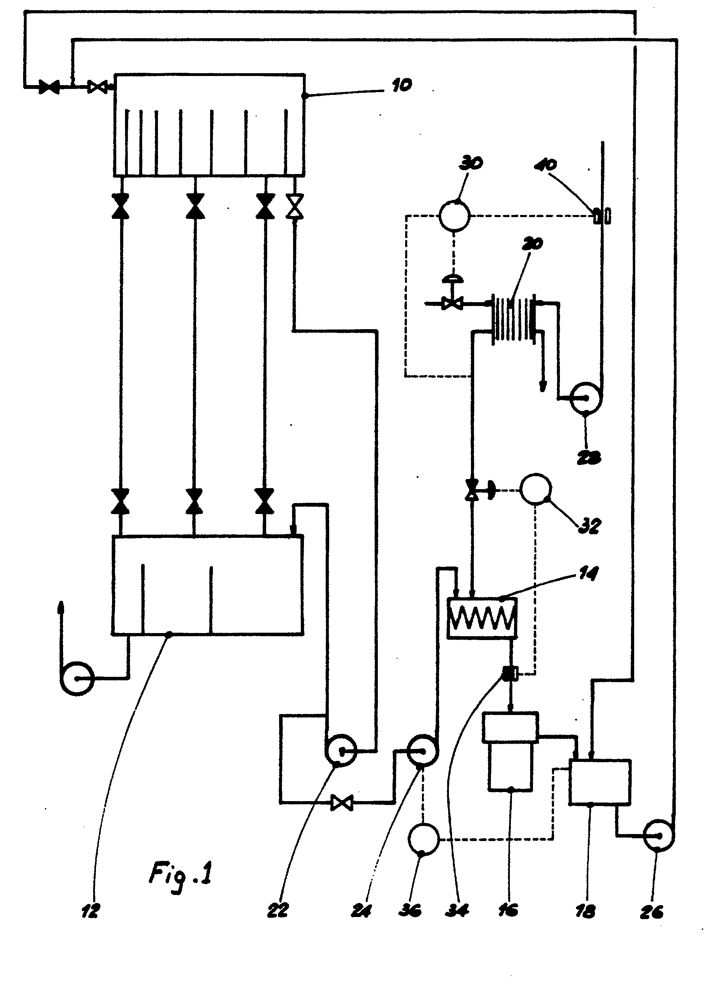

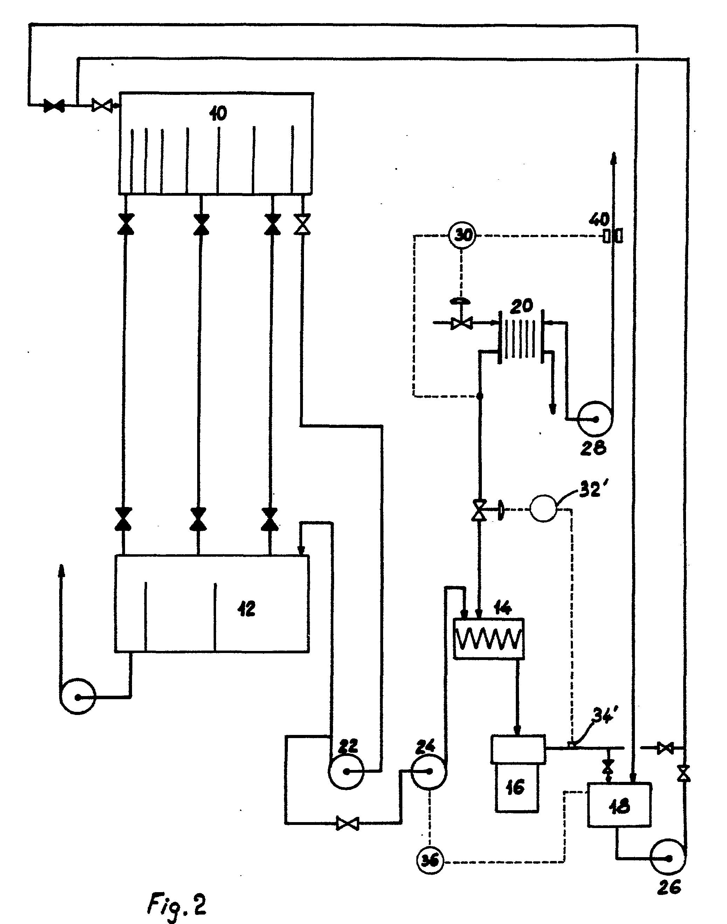

La description qui suit se réfère aux dessins l'accompagnant et sur lesquels les figures 1 et 2 sont des schémas d'installations pour la mise en œuvre du procédé de l'invention en sucrerie.

L'installation de la figure 1 comprend essentiellement un appareil de cristallisation à marche continue 10, un malaxeur 12, un mélangeur-dilueur 14, un broyeur 16, un malaxeur à magma 18, un échangeur de chaleur 20 et des pompes 22, 24, 26 et 28. Tous ces appareils sont connus et couramment utilisés en sucrerie.

La masse-cuite produite dans l'appareil 10 est extraite en continu par la pompe 22 qui alimente le malaxeur 12. Une fraction de la masse-cuite est prélevée au moyen de la pompe 24 et envoyée au mélangeur-dilueur 14 qui est également alimentée en sirop par la pompe 28. Avant d'alimenter l'appareil 14 le sirop est réchauffé ou refroidi dans l'échangeur 20; un régulateur 30 maintient la température du sirop sortant de l'échangeur 20 à une valeur de consigne en agissant sur une vanne contrôlant le débit du fluide chauffant ou réfrigérant. La consigne du régulateur de température 30 est fonction du brix du sirop, mesuré par le gammadensimètre 40.

La masse-cuite diluée sortant du mélangeur 14 alimente le broyeur 16 ; sa dilution est réglée au moyen du régulateur 32 qui agit sur une vanne contrôlant le débit de sirop entrant dans l'appareil 14 en fonction des informations fournies par un gammadensimètre 34 qui mesure la viscosité de la masse-cuite. En variante, cette régulation pourrait être basée sur une mesure de la perte de charge sur une longueur prédéterminée de la conduite reliant le diluer 14 au broyeur 16. Suivant une autre variante, le débit de sirop de dilution pourrait être maintenu proportionnel au débit de masse-cuite prélevée pour la production du magma ou au débit de magma produit, c'est-à-dire au débit des pompes 24 ou 26.

Dans le broyeur 16, les cristaux de la masse-cuite sont fragmentés de telle sorte que la dimension moyenne des cristaux contenus dans le magma sortant du broyeur soit environ le tiers de celle des cristaux contenus dans la masse-cuite diluée y entrant. Le broyeur pourra, par exemple, être du type dit colloïdal et constitué par un stator en forme de tronc de cône, à l'intérieur duquel tourne un rotor en forme de cône, la grosseur moyenne des cristaux broyés étant fonction de l'écartement entre rotor et stator.

Le magma produit est envoyé dans le malaxeur 18 servant de réservoir tampon. Ce malaxeur a une capacité faible correspondant à un temps de séjour du magma d'environ une demie heure. Le magma est soutiré du malaxeur 18 par la pompe 26 qui alimente l'appareil de cristallisation à marche continue 10. Le débit de la pompe 26 est réglé, par une chaine de régulation non-représentée, pour satisfaire en permanence aux besoins de l'appareil 10. Un régulateur de niveau 36 commande la vitesse de rotation de la pompe 24 pour maintenir le débit de masse-cuite prélevée proportionnel au débit de magma consommé.

Le régulateur 30 maintient entre la température du sirop et son brix une relation préétablie telle que la masse-cuite diluée entrant dans le broyeur 16 soit légèrement sous-saturée, c'est-à-dire que son coefficient de saturation soit compris dans la fourchette 0,95–1,00, en dépit des variations possibles des différents paramètres. Suivant la température initiale du sirop, on utilisera un fluide chauffant ou un fluide réfrigérant dans l'échangeur 20 pour amener sa température à la valeur voulue.

Au lieu d'utiliser une mesure de la viscosité pour régler le débit de sirop, au moyen du régulateur 32, on pourrait utiliser une mesure de la température de la masse-cuite sortant du dilueur.

L'installation dont le schéma est représenté sur la figure 2 diffère de celle qui vient d'être décrite par le fait que le débit de sirop de dilution est réglé au moyen d'un régulateur 32′ de façon à maintenir à une valeur de consigne la température du magma à la sortie du broyeur 16; cette température est mesurée au moyen d'un organe 34′.

La valeur de consigne du régulateur 32′ est déterminée en fonction du brix, de la température et du débit du sirop, du débit, de la température, du brix et de la teneur en cristaux de la masse-cuite et de la teneur en cristaux désirée du magma. Elle peut être calculée à intervalles de temps réguliers par un calculateur recevant les informations nécessaires de capteurs. A titre d'exemple, pour produire 8 t/h de magma ayant une teneur en cristaux de 30 % à partir d'une masse-cuite ayant une température de 79°C, on dilue cette dernière avec un sirop ayant un brix de 74 et maintenu à une température de 75°C, le débit de sirop étant réglé de façon à maintenir la température du magma à la sortie du broyeur à 85°C.

Au lieu d'utiliser pour la production du magma de la masse-cuite prélevée à la sortie de l'appareil 10, on pourrait utiliser une masse-cuite soutirée en un point intermédiaire de cet appareil.

A la sortie du broyeur le magma pourra être tamisé pour en extraire les gros cristaux qui seront renvoyés, avec une partie de la liqueur-mère, dans le mélangeur-dilueur. Par exemple, pour produire un magma dont la dimension moyenne des cristaux est de 190 μm à partir d'une masse-cuite dont la dimension moyenne des cristaux est de 580 μm on éliminera par tamisage les cristaux dont les dimensions sont supérieures à 400 μm.

## Revendications

1. Procédé de production d'un magma d'ensemencement pour un appareil de cristallisation à marche continue consistant à diluer une fraction de la masse-cuite produite par cet appareil, pour réduire sa viscosité, et à l'introduire dans un broyeur où les cristaux qu'elle contient sont broyés au sein de la liqueur-mère, caractérisé en ce que le coefficient de saturation de la liqueur-mère de ladite fraction de masse-cuite diluée entrant le broyeur est maintenu dans la fourchette 0,95–1,00, de façon à n'assurer la refonte que des très fins cristaux produits par broyage, en réglant la température et le débit de la liqueur de dilution.

2. Procédé selon la revendication 1, caractérisé en ce que la température de la liqueur de dilution est réglée en fonction de la teneur en matières sèches de ladite liqueur.

3. Procédé selon la revendication 1 ou 2, caractérisé en ce que le débit de la liqueur de dilution est réglé en fonction de la viscosité de la masse-cuite diluée.

4. Procédé selon la revendication 1 ou 2, caractérisé en ce que le débit de la liqueur de dilution est réglé en fonction de la température de la masse-cuite diluée.

5. Procédé selon la revendication 1 ou 2, caractérisé en ce que le débit de la liqueur de dilution est réglé en fonction du débit de masse-cuite utilisé pour la production du du magma ou du débit de magma.

6. Procédé selon la revendication 1 ou 2, caractérisé en ce que le débit de la liqueur de dilution est réglé en fonction de la température du magma à sa sortie du broyeur.

7. Procédé selon l'une quelconque des revendications précédentes, caractérisé en ce que, après broyage, la masse-cuite est soumise à un tamisage et les refus sont recyclés et mélangés à ladite fraction de la masse-cuite avant ou en cours de dilution.

8. Installation pour la production d'un magma d'ensemencement pour un appareil de cristallisation à marche continue à partir d'une fraction de la masse-cuite produite dans cet appareil, comportant un appareil (14) où la masse-cuite est diluée au moyen d'une liqueur et un broyeur (16) où la masse-cuite diluée est broyée, caractérisée en ce qu'elle comporte en outre un échangeur de chaleur (20) placé sur le circuit de la liqueur de dilution, en amont dudit appareil de dilution, et un système de régulation (32, 34, 32′, 34′) qui commande une vanne de réglage placée sur ledit circuit de la liqueur de dilution soit en fonction des informations d'un appareil de mesure (34) de la viscosité ou de la température de la masse-cuite diluée alimentant le broyeur, soit en fonction des informations d'un appareil de mesure (34′) de la température ou du débit du magma à la sortie du broyeur.

9. Installation selon la revendication 8, caractérisée en ce qu'elle comporte un dispositif de régulation (30) qui règle la température de la liqueur de dilution à la sortie dudit échangeur (20) en fonction de la teneur en matières sèches de ladite liqueur.

## Claims

1. Process of production of a seeding magma for a continuous vacuum pan consisting in diluting a fraction of the massecuite produced by this apparatus so as to reduce its viscosity, and in introducing it in a grinding mill in which the crystals it contains are ground within the mother liquor, characterized in that the saturation coefficient ot the mother liquor of the said diluted massecuite fraction entering the grinding mill is maintained within a bracket 0.95–1.00, so that only the very small crystals produced by grinding are remelted by adjusting the dilution liquor temperature and flow rate.

2. Process according to claim 1, characterized in that the dilution liquor temperature is adjusted according to the dry substance content of the said liquor.

3. Process according to claim 1 or 2, characterized in that the dilution liquor flowrate is adjusted according to the viscosity of the diluted massecuite.

4. Process according to claim 1 or 2, characterized in that the dilution liquor flowrate is adjusted according to the temperature of the diluted massecuite.

5. Process according to claim 1 or 2, characterized in that the dilution liquor flowrate is adjusted according to the massecuite flowrate used to produce the magma, or of the magma flowrate.

6. Process according to claim 1 or 2, characterized in that the dilution liquor flowrate is adjusted according to the temperature of the magma flowing out of the grinding mill.

7. Process according to anyone of the above claims, characterized in that the massecuite is screened after being ground, and the oversize particles are recycled and mixed with the said fraction of massecuite before or in process of dilution.

8. Plant for producing a seeding for a continuous vacuum pan from a fraction of the massecuite produced in this apparatus, including an apparatus (14) in which the massecuite is diluted with liquor, and a grinding mill (16) in which the diluted massecuite is ground, characterized in that it further includes a heat exchanger (20) located on the dilution liquor circuit, upstream of the said dilution apparatus, and a regulating system (32, 34, 32', 34') which controls a regulating valve mounted on the said dilution liquor circuit either according to the information supplied by an instrument (34) which measures the viscosity or the temperature of the diluted massecuite fed to the grinding mill, or according to the information supplied by an instrument (34') which measures the temperature of the flowrate of the magma flowing out of the grinding mill.

9. Plant according to claim 8, characterized in that it includes a regulating device (30) which adjusts the temperature of the dilution liquor flowing out of the said exchanger (20) according to the dry substance content of the said liquor.

**Patentansprüche**

1. Verfahren zur Herstellung von Impfmagma für einen kontinuierlichen Kristallisationsapparat, darin beruhend, dass ein Teil der von diesem Apparat erzeugten Kochmasse zur Verringerung der Viskosität verdünnt und in eine Mühle eingeleitet wird, in der die sich darin befindlichen Kristalle im Muttersirup gemahlen werden, dadurch gekennzeichnet, dass die Sättigungszahl des Muttersirups besagten Anteils verdünnter Kochmasse, der in die Mühle eingeleitet wird, durch die Regelung der Temperatur und der Menge des Verdünnungssirups in einer Spanne von 0,95–1,00 gehalten wird, so dass nur die beim Mahlen entstandenen sehr feinen Kristalle aufgelöst werden.

2. Verfahren gemäss Anspruch 1, dadurch gekennzeichnet, dass die Temperatur des Verdünnungssirups in Abhängigkeit vom Trockensubstanzgehalt besagten Sirups geregelt wird.

3. Verfahren gemäss Anspruch 1 oder 2, dadurch gekennzeichnet, dass die Verdünnungssirupmenge in Abhängigkeit von der Viskosität der verdünnten Kochmasse geregelt wird.

4. Verfahren gemäss Anspruch 1 oder 2, dadurch gekennzeichnet, dass die Verdünnungssirupmenge in Abhängigkeit von der Temperatur der verdünnten Kochmasse geregelt wird.

5. Verfahren gemäss Anspruch 1 oder 2, dadurch gekennzeichnet, dass die Verdünnungssirupmenge in Abhängigkeit von der für die Magmaerzeugung benutzten Kochmassenmenge oder der Magmamenge geregelt wird.

6. Verfahren gemäss Anspruch 1 oder 2, dadurch gekennzeichnet, dass die Verdünnungssirupmenge in Abhängigkeit von der Magmatemperatur am Auslauf der Mühle geregelt wird.

7. Verfahren gemäss irgendeinem der vorherigen Ansprüche, dadurch gekennzeichnet, dass die Kochmasse nach dem Mahlen gesiebt wird und dass der Siebrückstand zurückgeführt und mit besagtem Kochmasseanteil vor oder während der Verdünnung vermischt wird.

8. Anlage zur Herstellung von Impfmagma für einen kontinuierlichen Kristallisationsapparat aus einem Teil der von diesem Apparat erzeugten Kochmasse, bestehend aus einem Apparat (14), in dem die Kochmasse mit Sirup verdünnt wird, und einer Mühle (16), in der die verdünnte Kochmasse gemahlen wird, dadurch gekennzeichnet, dass sie darüberhinaus einen im Verdünnungssirupkreis, einlaufseitig besagten Verdünnungsapparats angeordneten Wärmeaustauscher (20) und ein Regelsystem (32, 34, 32', 34') umfasst, das ein in besagtem Verdünnungssirupkreis angeordnetes Regelventil entweder in Abhängigkeit von den Informationen eines Geräts (34) zur Messung der Viskosität bzw. der Temperatur der in die Mühle eingeleiteten verdünnten Kochmasse, oder der Informationen eines Geräts (34') zur Messung der Temperatur bzw. der Menge des aus der Mühle auslaufenden Magmas steuert.

9. Anlage gemäss Anspruch 8, dadurch gekennzeichnet, dass sie mit einer Regelvorrichtung (30) ausgerüstet ist, welche die Verdünnungssiruptemperatur am Auslauf besagten Wärmeaustauschers (20) in Abhängigkeit vom Trockensubstanzgehalt besagten Sirups regelt.

Fig .1

EP 0 255 786 B1

Fig. 2